(19) Europäisches Patentamt
European Patent Office
Office européen des brevets

(11) EP 2 490 140 A1

(12) EUROPÄISCHE PATENTANMELDUNG

(43) Veröffentlichungstag:
22.08.2012 Patentblatt 2012/34

(51) Int Cl.:
*G06F 17/50* (2006.01)

(21) Anmeldenummer: 11177738.9

(22) Anmeldetag: 17.08.2011

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 19.08.2010 DE 102010034876

(71) Anmelder: PART Engineering GmbH
51429 Bergisch-Gladbach (DE)

(72) Erfinder:
• Korte, Wolfgang
51069 Köln (DE)
• Stojek, Marcus
53804 Much (DE)

(74) Vertreter: Naeven, Ralf
König & Naeven
Patent- und Rechtsanwaltskanzlei
Kackertstrasse 10
52072 Aachen (DE)

(54) **Computerimplementierters Verfahren zur Bestimmung des elasto-plastischen, mechanischen Verhaltens von inhomogenen, anisotropen Werkstoffen**

(57) Es wird ein computerimplementiertes Verfahren zur Bestimmung des elasto-plastischen mechanischen Verhaltens von inhomogenen anisotropen Werkstoffen vorgestellt, bei dem zunächst das linear-elastische Verhalten der Matrix-Phase des faserverstärkten Kunststoffs ermittelt und dann durch Anwendung einer Korrekturformel das plastische Verhalten berechnet wird, wobei eine isotrope Korrekturformel ausschließlich auf die linear-elastisch berechnete homogenisierte Matrix-Phase des Werkstoffs angewendet wird.

Die so berechneten pseudo-plastischen Spannungen und Dehnungen in der Matrix-Phase können dann für eine nachfolgende Bewertung der statischen Tragfähigkeit oder Ermüdungsfestigkeit des untersuchten faserverstärkten Kunststoffbauteils verwendet werden.

Fig. 2

1 Spritzgieß-simulation

2 Faser-übertragung

3 FEM-Modell

4b Subroutine (Materialmodell/ Homogenisierung)

4a FEM-Struktursimulation

6 FEM-Post Processing $(\sigma_p, \varepsilon_p)$

5 $\sigma_H, \varepsilon_H$

**Beschreibung**

Technisches Gebiet

Die vorliegende Erfindung bezieht sich auf das Gebiet der Analyse und Vorhersage des mechanischen Verhaltens von Bauteilen. Sie betrifft ein Verfahren zur Bestimmung des elasto-plastischen Verhaltens von Bauteilen gemäß dem Oberbegriff des Anspruchs 1.

Stand der Technik

Im Folgenden wird der Stand der Technik dargestellt.
Es zeigen:

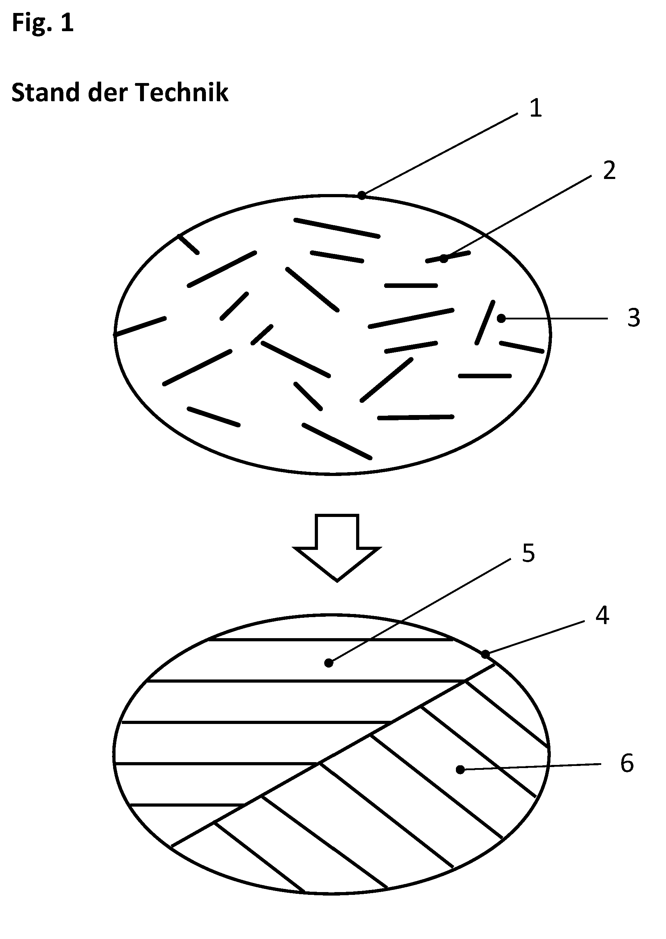

Fig. 1: Heterogener Faser-/Matrix-Verbund und homogenisiertes Kontinuum

Faserverstärkte Kunststoffbauteile werden vielfach im Spritzgießverfahren hergestellt. Typische Faserlängen liegen im Bereich von wenigen Zehntelmillimeter bis hin zu einigen Millimetern. Infolge der Ausrichtung der Fasern beim Einspritzen des schmelzeförmigen Kunststoffs in die Form, besitzt der Werkstoff, und damit auch das Bauteil, keine richtungsunabhängigen (isotropen) Eigenschaften mehr. Vielmehr liegen an jeder Stelle im Bauteil unterschiedliche Faserausrichtungen vor. Damit ist das Bauteilverhalten richtungsabhängig (anisotrop). In Fig. 1 ist in abstrahierter Form ein Volumenteilchen eines kurzfaserverstärkten Kunststoffs (1) dargestellt. Faserverstärkter Kunststoff ist generell ein inhomogener Werkstoff bestehend aus einer Faser-Phase (2) und einer Matrix-Phase (3). Das mechanische Werkstoffverhalten des faserverstärkten Verbundwerkstoffes ergibt sich dann aus den mechanischen Eigenschaften der einzelnen Phasen sowie aus der Faserorientierung und des Fasergehaltes.

Im Rahmen der Entwicklung von Produkten aus solchen faserverstärkten Kunststoffen ist es wünschenswert bereits in frühen Phasen der Produktentwicklung Aussagen über das mechanische Verhalten des Produkts machen zu können. Hierzu werden regelmäßig numerische Simulationsmethoden wie z.B. die Finite-Elemente-Methode (FEM) eingesetzt. Voraussetzung zur sinnvollen Anwendung solcher Methoden ist das Vorhandensein eines mathematischen Werkstoffmodells, das mindestens das Spannungs-/Dehnungs-Verhalten des betrachteten Werkstoffs abbilden kann.

Kunststoffe weisen strukturbedingt ein nichtlineares elasto-plastisches Spannungs-/Dehnungs-Verhalten auf. Die Nichtlinearität beruht auf visko-elastischen (reversiblen) und plastischen (irreversiblen) Effekten. Im Falle der oben beschriebenen faserverstärkten Kunststoffe ist diesem elasto-plastischem Verhalten die Anisotropie noch überlagert. D.h. zur werkstofflich korrekten Beschreibung eines solchen Kunststoffs muss neben der Elasto-Plastizität auch die Anisotropie erfasst werden.

Die mathematische Beschreibung des elasto-plastischen isotropen Verhaltens alleine stellt kein Problem dar. Die isotrope elasto-plastische Spannungs-/Dehnungs-Kurve kann einem geeigneten FEM-Simulationsprogramm z.B. in tabellierter Form übergeben werden (z. B. [1]). Auch die mathematische Beschreibung eines linear-elastischen anisotropen Werkstoffs alleine ist Stand der Technik (z. B. [1]).

Ebenfalls Stand der Technik jedoch mit großem Aufwand verbunden ist die vollständige anisotrope elasto-plastische Werkstoffmodellierung. Eine Möglichkeit besteht beispielsweise über das Hill-Fließkriterium [2]. Hierbei müssen jedoch experimentell sechs Parameter mittels unabhängiger Versuche ermittelt werden, so dass diese Vorgehensweise aufgrund des hohen Aufwands für praktische Belange uninteressant ist.

Eine andere Vorgehensweise wird beispielsweise in [3] dargestellt. Auf Basis eines mikromechanischen Modells [4, 5] erfolgt ausgehend von den mechanischen Eigenschaften der Faser und der Matrix, der vorliegenden Faserorientierungsverteilungen sowie den auf den Verbundwerkstoff wirkenden äußeren Spannungen und Dehnungen eine sogenannte Homogenisierung des real heterogenen Verbundwerkstoffs. Hierzu wird mittels des von Mori und Tanaka [4] beschriebenen strain concentration tensors $B^\varepsilon$ das im Bauteil örtlich gemittelte mechanische Werkstoffverhalten in Form einer Tangentensteifigkeitsmatrix des Verbundwerkstoffes berechnet und kann z.B. an ein FEM-Programm übergeben werden. Neben den anisotropen jedoch homogenisierten Verbundeigenschaften bleibt auch das individuelle Werkstoffverhalten der einzelnen Phasen zugänglich für ggf. nachfolgende Berechnungs- und Analyseoperationen. Die Phasen können dabei ebenfalls jeweils als homogenisiertes Kontinuum betrachtet werden. Die homogenisierten Phasen bilden ein mittleres Werkstoffverhalten ab, in dem implizit (über das Volumen "verschmiert") die Effekte der Faserverstärkung berücksichtigt werden. In Fig. 1 ist in abstrahierter Form die Homogenisierung des heterogenen Verbundwerkstoffs (1) zum homogenisierten Kontinuum (4) dargestellt, wobei die Faser- und Matrix-Phasen (5), (6) jeweils als homogenes Kontinuum erhalten bleiben. Das Verfahren (sogenanntes Mean-Field-Konzept) erlaubt sowohl die anisotrope linear-elastische als auch die anisotrope elasto-plastische Werkstoffmodellierung. Die mathematischen Gleichungssätze zur Durchführung des Homogenisierungsverfahrens sind hier nicht dargestellt, da sie zum Stand der Technik gehören.

Die Berechnung des homogenisierten mittleren Werkstoffverhaltens der einzelnen Phasen erfolgt in Verbindung mit einem FEM-Programm iterativ für jeden einzelnen Integrationspunkt des FEM-Modells. Erfolgt die Simulation nicht nur linear-elastisch sondern elasto-plastisch ist die berechnete Tangentensteifigkeitsmatrix nicht mehr konstant sondern ändert sich mit jedem neuen Lastschritt. Neben den ohnehin erforderlichen Iterationen zur Ermittlung des homogenisierten Werkstoffverhaltens sind dann zusätzliche, geschachtelte Iterationen zur Bestimmung der nichtkonstanten Tangentensteifigkeitsmatrix erforderlich. Der Anwendung des Verfahrens bei der FEM-Simulation von Praxisbauteilen, die leicht mehrere Millionen Freiheitsgrade besitzen können, sind aufgrund der numerisch aufwändigen iterativen Vorgehensweise enge Grenzen gesetzt. Die Berechnungszeiten sind, auch bei leistungsfähiger Computer-Hardware, vielfach nicht mehr akzeptabel.

Aus der Literatur bekannt sind auch Näherungslösungen zur Beschreibung des elasto-plastischen Werkstoffverhaltens [6], [7], [8]. Diese Ansätze basieren auf Erkenntnissen der Kerbspannungslehre [9] und haben in der Vergangenheit Anwendung bei der Betriebsfestigkeitsanalyse metallischer Bauteile gefunden [10], [11]. Vorteilhaft bei diesen Näherungslösungen ist, dass zunächst eine numerisch vergleichsweise wenig aufwändige linear-elastische Berechnung durchgeführt wird und dann das elasto-plastische Verhalten aus dem linear-elastischen Verhalten durch Anwendung einer Korrekturformel angenähert wird. Die so berechneten Spannungen und Dehnungen werden dann als pseudo-plastisch bezeichnet. Diese Näherungslösungen sind jedoch für isotrope homogene Werkstoffe formuliert und damit zur direkten Anwendung für die heterogenen faserverstärkten Kunststoffe nicht geeignet.

In [12] wird ein Verfahren beschrieben, das zur Annäherung des elasto-plastischen Werkstoffverhaltens von anisotropen einkristallinen Werkstoffen eine modifizierte anisotrope Form der klassischen Neuber-Regel (z. B. [10]) verwendet. Die hergeleitete Formel ermöglicht zwar grundsätzlich das anisotrope elasto-plastische Verhalten anzunähern, ist jedoch beschränkt auf einkristalline Materialien mit kubischer Kristallsymmetrie. Des Weiteren wird keine Unterscheidung zwischen verschiedenen Werkstoffphasen gemacht. Diese Einschränkungen lassen die Anwendung des Verfahrens für faserverstärkte Kunststoffbauteile ausscheiden.

Es wäre wünschenswert ein Verfahren zu haben, dass das anisotrope elasto-plastische Werkstoffverhalten von faserverstärkten Kunststoffbauteilen ausreichend exakt beschreibt und bei Anwendung des Verfahrens in Verbindung mit einem numerischen Simulationsverfahrens wie z.B. der FEM akzeptable Berechnungszeiten aufweist. Dies würde eine deutlich genauere und schnellere Vorhersage des mechanischen Verhaltens und damit auch der statischen Tragfähigkeit und der Ermüdungsfestigkeit von faserverstärkten Kunststoffbauteilen ermöglichen als es heute der Fall ist.

Darstellung der Erfindung

Es ist daher Aufgabe der Erfindung, ein Verfahren zur näherungsweisen Bestimmung des elasto-plastischen Verhaltens von inhomogenen anisotropen Werkstoffen, z. B. faserverstärkten Kunststoffen, anzugeben, das in Verbindung mit numerischen Simulationsverfahren akzeptable Berechnungszeiten gewährleistet.

Die Aufgabe wird durch die Gesamtheit der Merkmale des Anspruchs 1 gelöst. Wesentliches Merkmal der Erfindung ist, dass eine isotrope Korrekturformel ausschließlich auf die linear-elastisch berechnete homogenisierte Matrix-Phase des Werkstoffs angewendet wird. Die gemäß dem Stand der Technik bekannte Anwendung solcher Korrekturformeln, unterscheidet weder zwischen der Anwendung der Korrekturformel für unterschiedliche Phasen eines Werkstoffs noch bezüglich der Anwendung auf eine homogenisierte Phase eines ansonsten inhomogenen Werkstoffs. Im Falle von faserverstärkten Kunststoffen trägt die erfindungsgemäße Anwendung der Korrekturformel nur auf die Matrix-Phase der Tatsache Rechnung, dass eine Plastifizierung des faserverstärkten Kunststoffverbundes auch in der Realität nur infolge einer Plastifizierung der Matrix-Phase erfolgt, die Faser-Phase bleibt, z.B. für den Fall einer Glasfaserverstärkung, immer linear-elastisch.

Aufgrund der Tatsache, dass bei Anwendung des Verfahrens gemäß Anspruch 1 das Spannungs-/Dehnungs-Verhalten der homogenisierten Matrix-Phase linear-elastisch berechnet werden kann und die Plastizität nur durch Anwendung der Korrekturformel berücksichtigt wird, werden numerisch aufwändige Gleichgewichtsiterationen infolge plastischen Werkstoffverhaltens vermieden. Des Weiteren erlaubt die durchgeführte Homogenisierung die Anwendung der bekannten isotropen Korrekturformeln.

Eine bevorzugte Ausgestaltung der Erfindung ist in Anspruch 2 angegeben, in dem die Homogenisierung der Matrix-Phase mittels eines Mean-Field-Konzepts insbesondere des Ansatzes von Mori und Tanaka durchgeführt wird. Für praxisrelevante Bauteile ist es dabei sinnvoll das linear-elastische Spannungs-/Dehnungs-Verhalten der homogenisierten Matrix-Phase unter Zuhilfenahme einer numerischen Simulationsmethode wie der FEM oder BEM zu ermitteln.

Weitere vorteilhafte Ausgestaltungen der Erfindung sind in den Ansprüchen 3 bis 5 angegeben. Die hier angegebenen Korrekturformeln zeigen, insbesondere für solche Fälle in denen eine Plastifizierung des Bauteils nicht nur lokal begrenzt, z.B. an scharfen Kerben, auftritt sondern auch Teil- oder Vollplastifizierungen des Nennquerschnitts auftreten, eine bessere Vorhersage des elasto-plastischen Verhaltens.

Erfindungsgemäß wird das Verfahren zur Bestimmung der statischen Tragfähigkeit und der Ermüdungsfestigkeit von spritzgegossenen faserverstärkten Kunststoffteilen eingesetzt.

Wege zur Ausführung der Erfindung

Im Folgenden wird exemplarisch ein Ausführungsbeispiel der Erfindung unter Anwendung der klassischen Neuber-Regel dargestellt.

Es zeigen:

Fig. 2: Flussdiagramm zur Durchführung des Verfahrens

Fig. 3: Anwendung der klassischen Neuber-Regel als Korrekturformel

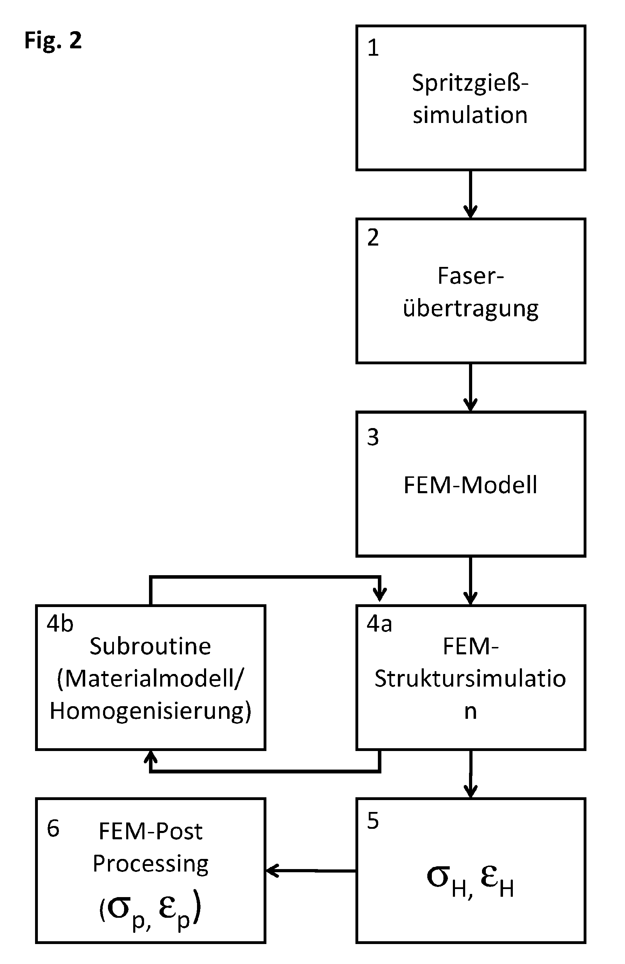

In Fig. 2 sind beispielhaft in einem Flussdiagramm die Arbeitsschritte dargestellt, die erforderlich sind um das erfundene Verfahren anwenden zu können.

Arbeitsschritt 1: Zunächst muss eine Spritzgießsimulation (1) durchgeführt werden, um im betrachteten Bauteil die lokalen Faserorientierungen zu ermitteln. Zur Durchführung dieses Arbeitsschrittes können alle kommerziell verfügbaren Spritzgießsimulationsprogramme verwendet werden, die als Ergebnis die benötigten Faserorientierungen in geeigneter Form liefern.

Arbeitsschritt 2: Nach durchgeführter Spritzgießsimulation müssen die erhaltenen Faserorientierungen mittels einer geeigneten Software (2) vom Spritzgießsimulationsmodell in das FEM-Modell für die Strukturanalyse (3) übertragen werden. Hierzu existieren kommerziell verfügbare Programme und Schnittstellen (z.B. [13]).

Arbeitsschritt 3: Nachdem die Faserorientierungen im FEM-Modell für die Struktursimulation verfügbar sind, erfolgt die FEM-Struktursimulation (4a) zur Ermittlung des mechanischen Verhaltens des betrachteten kurzfaserverstärkten Kunststoffbauteils. Die zur erfindungsgemäßen Durchführung des Verfahrens erforderliche Homogenisierung des heterogenen Kunststoffverbundes (siehe Fig. 1) kann dabei z.B. mittels einer Subroutine (4b) erfolgen. In der Subroutine sind dabei die bekannten mathematischen Gleichungssätzen zur Durchführung der Homogenisierung softwaremäßig abgelegt. Die Homogenisierung erfolgt dabei iterativ. In der Subroutine ist dann das gesamte mathematische Werkstoffmodell enthalten, wobei eine linear-elastische Spannungs-/Dehnungs-Beziehung angenommen wird. Das FEM-Programm liefert der Subroutine jeweils die auf das betrachtete finite Element wirkenden äußeren Dehnungen und die Subroutine berechnet daraus ein homogenisiertes, mittleres, linearelastisches Werkstoffverhalten, welches dem FEM-Programm als Tangentensteifigkeitsmatrix wieder zurückgeliefert wird. Nachdem die Lösung konvergiert ist liefert das FEM-Programm das linear-elastische Werkstoffverhalten des Verbundes sowie die homogenisierten, mittleren, linear-elastischen (Hookeschen) Spannungen $\sigma_H$ und Dehnungen $\varepsilon_H$, jeweils in Faser- und Matrix-Phase (5).

Arbeitsschritt 4: Die Anwendung des erfindungsgemäßen Verfahrens entsprechend des Anspruchs 1 erfolgt im FEM-Post-Processing (6). Als Korrekturformel zur Ermittlung des elasto-plastischen bzw. pseudo-plastischen Verhaltens der Matrix-Phase ($\sigma_p$ und $\varepsilon_p$) wird im hier dargestellten Beispiel die Neuber-Formel verwendet. Hierzu erfolgt die Anwendung der Korrekturformel erfindungsgemäß ausschließlich auf die linear-elastisch berechneten mittleren Spannungen und Dehnungen der Matrix-Phase ($\sigma_H$ und $\varepsilon_H$).

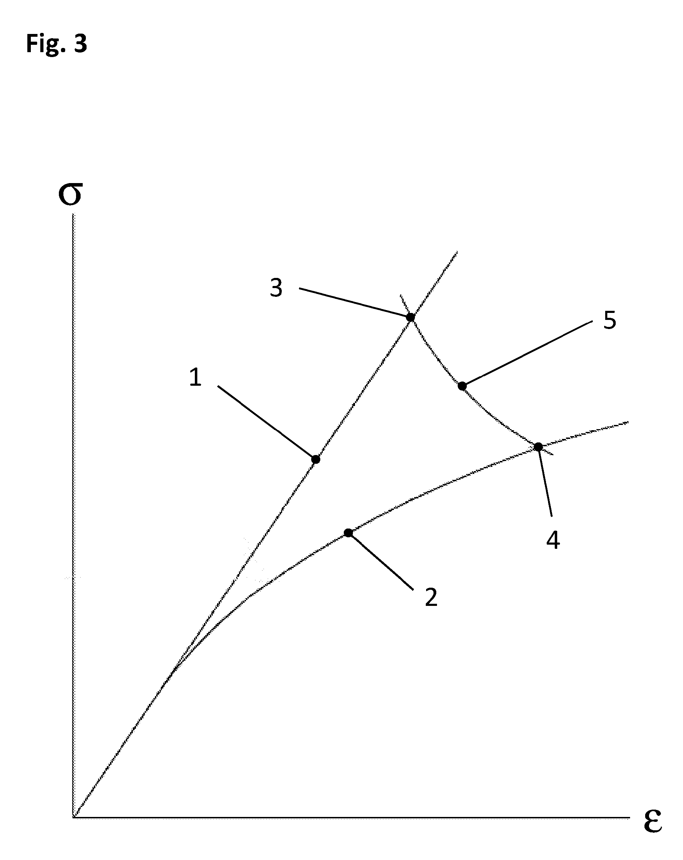

In Fig. 3 ist die Durchführung der Korrektur exemplarisch grafisch dargestellt. In dem dargestellten Spannungs-/Dehnungs-Diagramm ist mit (1) die linear-elastische Spannungs-/Dehnungs-Kurve der Matrix-Phase bezeichnet und mit (2) die reale elasto-plastische Spannungs-/Dehnungs-Kurve des Matrix-Werkstoffs. (3) bezeichnet die berechnete linear-elastisch berechnete mittlere Spannung und Dehnung in der Matrix-Phase. (4) bezeichnet die mittels der Korrekturformel ermittelte pseudo-plastische mittlere Spannung und Dehnung in der Matrix-Phase. Grafisch werden die pseudo-plastischen Spannungen und Dehnungen als Schnittpunkt einer Hyperbel (5) mit der realen elasto-plastischen Spannungs-/Dehnungs-Kurve des Matrix-Werkstoffs bestimmt. Die reale elasto-plastische Spannungs-/Dehnungs-Kurve des Matrix-Werkstoffs (2) muss dabei, z.B. aus Messungen oder Entnahme aus Tabellenwerken, bekannt sein. Programmtechnisch erfolgt die Ermittlung des Schnittpunkts der Hyperbel mit der realen elasto-plastischen Spannungs-/Dehnungs-Kurve des Matrix-Werkstoffs iterativ über ein Näherungsverfahren wie z.B. einer Newton-Raphson-Iteration. Die so berechneten pseudo-plastischen Spannungen und Dehnungen können dann abgespeichert und für eine nachfolgende Bewertung der statischen Tragfähigkeit oder Ermüdungsfestigkeit des untersuchten faserverstärkten Kunststoffbauteils verwendet werden.

Die hier dargestellte Vorgehensweise der Korrektur der berechneten linear-elastischen Werte im Post-Processing kann auch dahingehend geändert werden, dass die Korrektur schon direkt innerhalb der Subroutine (Fig. 2 (4b)) zur Laufzeit der FEM-Simulation erfolgt. Des Weiteren kann die Subroutine auch durch eine eigenständige externe Software mit identischer Funktion ersetzt werden, die dann zur Laufzeit über eine geeignete Schnittstelle mit dem FEM-Programm kommuniziert. Die Subroutine kann auch integrativer Bestandteil eines geeigneten FEM-Programms sein. Auch können zur Korrektur, gemäß den Ansprüchen 3 bis 5, andere Formeln verwendet werden.

Literatur

[1]                        Stojek, M. Stommel, M. Korte, W. FEM für die mechanische Auslegung von Kunststoff-undElastomerbauteilen, S. 123-125, Springer-VDI-Verlag, Düsseldorf, 1998

[2] Hill, R.               Hill yield criteria, http://en.wikipedia.org/wiki/Hill_yield_criteria

[3]                        Doghri, I. Friebel, C. Effective elasto-plastic properties of inclusion-reinforced composites: Study of shape, orientation and cyclic response, Mechanics of Materials 27, p. 45-68, Louvain-la-Neuve, 2005

[4]                        Mori, T. Tanaka, K. Average Stress in Matrix and Average Elastic Energy of Materials with Misfitting Inclusions, Acta Metallurgica 21, p. 571-574, Tokyo, 1973

[5]                        Eshelby, J.D. The Determination of the Elastic Field of an Ellipsoidal Inclusion and Related Problems, Proceedings of the Royal Society of London 241, No. 1226, 376-396, Birmingham, 1957

[6]                        Seeger, T. Beste, A. Zur Weiterentwicklung von Näherungsformeln für die Berechnung im elastisch-plastischen Bereich, Fortschrittsberichte VDI-Z, Reihe 18 (1997), S. 1-56

[7]                        Seeger, T. Heuler, P. Generalized application of Neuber's Rule, J. Testing andEvaluation, Vol. 1 (1980), p. 199-204

[8]                        Molski, K. Glinka, G. A method of elastic-plastic stress and strain calculation at a notch root, Materials Science and Engineering, Volume 50, Issue 1, September 1981, p. 93-100

[9]                        Neuber, H. Kerbspannungslehre, 4. Auflage, S. 86-89, Springer-Verlag, Berlin Heidelberg New York, 1985

[10]                     Haibach, E. Betriebsfestigkeit — Verfahren und Daten zur Bauteilberechnung, 2. Auflage, S. 358-364, Springer-Verlag, Berlin Heidelberg New York, 2002

[11]                     Sander, M. Sicherheit und Betriebsfestigkeit von Maschinen und Anlagen: Konzepte und Methoden zur Lebensdauervorhersage, 1. Auflage, S. 41-44, Springer-Verlag, Berlin Heidelberg New York, 2008

[12] Bernhardi, O. Mücke, R.    Verfahren zur Bestimmung des elasto-plastischen Verhaltens von aus anisotropem Material bestehenden Bauteilen sowie Anwendung des Verfahrens, Offenlegungsschrift DE 101 18542 A1

[13] N. N.              PART Converse — Advanced Simulation of Reinforced Plastics, http://www.part-gmbh.de/produkte.html

**Patentansprüche**

**1.** Computerimplementiertes Verfahren zur Bestimmung des elastoplastischen mechanischen Verhaltens von inhomogenen anisotropen Werkstoffen, bei welchem zunächst das linear-elastische Verhalten der Matrix-Phase ermittelt wird und dann durch Anwendung einer Korrekturformel das plastische Verhalten berechnet wird,
**dadurch gekennzeichnet,**
**dass** die Korrekturformel isotrop ist und ausschließlich auf die homogenisierte linear elastische Matrix-Phase des Werkstoffs angewendet wird.

**2.** Verfahren nach Anspruch 1, **dadurch gekennzeichnet, dass** das linear-elastische homogenisierte Werkstoffverhalten der Matrix-Phase mittels eines Mean-Field-Homogenisierungs-Konzepts, insbesondere des Mori-Tanaka-Modells und mit Hilfe einer numerischen Simulationsmethode, insbesondere der Finiten-Elemente-Methode (FEM) oder der Boundary-Element-Methode (BEM), ermittelt wird.

**3.** Verfahren nach Anspruch 1 oder 2, **dadurch gekennzeichnet, dass** als Korrekturformel die klassische isotrope Neuber-Regel der Form:

$$\sigma_p \cdot \varepsilon_p = \sigma_H \cdot \varepsilon_H = \frac{\sigma_H{}^2}{E}$$

mit:

$\sigma_p$ = *pseudo - plastische Spannung*
$\varepsilon_p$ = *pseudo - plastische Dehnung*
$\sigma_H$ = *linear - elastische* (*Hookesche*) *Spannung E = Ursprungs - Elastizitätsmodul*

angewendet wird.

**4.** Verfahren nach Anspruch 1 oder 2, **dadurch gekennzeichnet, dass** als Korrekturformel die erweiterte Neuber-Regel der Form:

$$\sigma_p \cdot \varepsilon_p = \sigma_H \cdot \varepsilon_H = \frac{\sigma_H{}^2}{E} \cdot \frac{\varepsilon^* \cdot E}{\sigma^*}$$

*mit*:

$\sigma_p$ = *pseudo - plastische Spannung*
$\varepsilon_p$ = *pseudo - plastische Dehnung*
$\sigma_H$ = *linear - elastische* (*Hookesche*) *Spannung*
*E = Ursprungs - Elastizitätsmodul*
$\varepsilon^*$ = *g*($\sigma^*$)

$$K_p = \frac{L_P}{L_F}$$

$L_P$ = *vollplastische Traglast*

verwendet wird.

**5.** Verfahren nach Anspruch 1 oder 2, **dadurch gekennzeichnet, dass** als Korrekturformel die Fließkurvenbeschreibung nach der Seeger-Formel:

$$\varepsilon_p = \frac{\sigma_p}{E} \cdot \left[ \left(\frac{\sigma_H}{\sigma_p}\right) \cdot \left(\frac{2}{u^2}\right) \cdot ln\left(\frac{1}{cos\,u}\right) + 1 - \left(\frac{\sigma_H}{\sigma_p}\right) \right] \cdot \left[ \frac{\varepsilon^* \cdot E}{\sigma^*} \right]$$

*mit*:

$$u = \frac{\pi}{2} \cdot \left( \frac{\frac{\sigma_H}{\sigma_p} - 1}{K_p - 1} \right)$$

verwendet wird.

**6.** Verfahren nach Anspruch 1 oder 2, **dadurch gekennzeichnet, dass** als Korrekturformel das Konzept der äquivalenten Formänderungsenergiedichte (Equivalent Strain Energy Density- ESED) der Form:

$$U_{pl} = \int \sigma_{pl} \cdot d\varepsilon_{pl} = U_{el} = \frac{1}{2} \cdot \sigma_H \cdot \varepsilon_H$$

*mit:*

$\sigma_{pl}$ = *elasto - plastische Spannung*
$\varepsilon_{pl}$ = *elasto - plastische Dehnung*
$U_{pl}$ = *elasto - plastische Formänderungsenergiedichte*
$U_{el}$ = *linear - elastische (Hookescke)Formänderungsenergiedichte*

verwendet wird.

**7.** Verfahren nach einem der Ansprüche 1 bis 6, **dadurch gekennzeichnet, dass** die Gleichung mit einem iterativen Verfahren, insbesondere einer Newton-Raphson-Iteration, gelöst wird.

**8.** Verfahren nach einem der Ansprüche 1 bis 7, **dadurch gekennzeichnet, dass** mindestens die berechneten pseudo-plastischen Spannungen und Dehnungen gespeichert werden.

**9.** Anwendung des Verfahrens nach einem der Ansprüche 1 bis 8 zur Bestimmung der statischen Tragfähigkeit und der Ermüdungsfestigkeit von spritzgegossenen faserverstärkten Kunststoffteilen.

**Fig. 1**

**Stand der Technik**

**Fig. 2**

```
                              ┌─────────────────────┐
                              │ 1                   │
                              │   Spritzgieß-       │
                              │   simulation        │
                              └─────────────────────┘
                                        │
                                        ▼
                              ┌─────────────────────┐
                              │ 2                   │
                              │   Faser-            │
                              │   übertragung       │
                              └─────────────────────┘
                                        │
                                        ▼
                              ┌─────────────────────┐
                              │ 3                   │
                              │   FEM-Modell        │
                              └─────────────────────┘
                                        │
      ┌──────────────────────────────┐ │
      │                              ▼ ▼
┌──────────────────────┐      ┌─────────────────────┐
│ 4b                   │      │ 4a                  │
│   Subroutine         │      │   FEM-              │
│  (Materialmodell/    │      │   Struktursimulatio │
│  Homogenisierung)    │◀─┐   │   n                 │
└──────────────────────┘  │   └─────────────────────┘
                          └────────────│
                                       ▼
┌──────────────────────┐      ┌─────────────────────┐
│ 6    FEM-Post        │      │ 5                   │
│    Processing        │◀─────│                     │
│   (σ_p, ε_p)         │      │   σ_H, ε_H          │
└──────────────────────┘      └─────────────────────┘
```

**Fig. 3**

EP 2 490 140 A1

Europäisches
Patentamt

European
Patent Office

Office européen
des brevets

**EUROPÄISCHER RECHERCHENBERICHT**

Nummer der Anmeldung

EP 11 17 7738

**EINSCHLÄGIGE DOKUMENTE**

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | KISHORE POCHIRAJU ET AL: "Modeling material property heterogeneity in fiber-reinforced injection molded plastic parts", POLYMER COMPOSITES, Bd. 26, Nr. 1, 1. Februar 2005 (2005-02-01), Seiten 98-113, XP55032622, ISSN: 0272-8397, DOI: 10.1002/pc.20080 * das ganze Dokument * ----- | 1-9 | INV. G06F17/50 |
| A | E. CAR ET AL: "Numerical simulation of fiber reinforced composite materials--two procedures", INTERNATIONAL JOURNAL OF SOLIDS AND STRUCTURES, Bd. 39, Nr. 7, 1. April 2002 (2002-04-01), Seiten 1967-1986, XP55032682, ISSN: 0020-7683, DOI: 10.1016/S0020-7683(01)00240-2 * das ganze Dokument * ----- | 1-9 | |
| | | | RECHERCHIERTE SACHGEBIETE (IPC) |
| A | D YE: "Further investigation of Neuber's rule and the equivalent strain energy density (ESED) method", INTERNATIONAL JOURNAL OF FATIGUE, Bd. 26, Nr. 5, 1. Mai 2004 (2004-05-01), Seiten 447-455, XP55032684, ISSN: 0142-1123, DOI: 10.1016/j.ijfatigue.2003.10.002 * das ganze Dokument * ----- -/-- | 1-9 | G06F |

Der vorliegende Recherchenbericht wurde für alle Patentansprüche erstellt

| Recherchenort | Abschlußdatum der Recherche | Prüfer |
|---|---|---|
| München | 13. Juli 2012 | Lerbinger, Klaus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EP 2 490 140 A1

Europäisches
Patentamt

European
Patent Office

Office européen
des brevets

**EUROPÄISCHER RECHERCHENBERICHT**

Nummer der Anmeldung

EP 11 17 7738

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DOGHRI I ET AL: "Micromechanical modeling and computation of elasto-plastic materials reinforced with distributed-orientation fibers", INTERNATIONAL JOURNAL OF PLASTICITY, PERGAMON, AMSTERDAM, NL, Bd. 21, Nr. 10, 1. Oktober 2005 (2005-10-01), Seiten 1919-1940, XP027818447, ISSN: 0749-6419 [gefunden am 2005-10-01] * das ganze Dokument * ----- | 1-9 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 13. Juli 2012 | Lerbinger, Klaus |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• DE 10118542 A1

**In der Beschreibung aufgeführte Nicht-Patentliteratur**

• **STOJEK, M. ; STOMMEL, M. ; KORTE, W.** FEM für die mechanische Auslegung von Kunststoff- undElastomerbauteilen. Springer-VDI-Verlag, 1998, 123-125
• **DOGHRI, I. ; FRIEBEL, C.** Effective elasto-plastic properties of inclusion-reinforced composites: Study of shape, orientation and cyclic response. *Mechanics of Materials,* 2005, vol. 27, 45-68
• **MORI, T. ; TANAKA, K.** Average Stress in Matrix and Average Elastic Energy of Materials with Misfitting Inclusions. *Acta Metallurgica,* 1973, vol. 21, 571-574
• **ESHELBY, J.D.** The Determination of the Elastic Field of an Ellipsoidal Inclusion and Related Problems. *Proceedings of the Royal Society of London,* 1957, vol. 241 (1226), 376-396
• **SEEGER, T. ; BESTE, A.** Zur Weiterentwicklung von Näherungsformeln für die Berechnung im elastisch-plastischen Bereich. *Fortschrittsberichte VDI-Z,* 1997, vol. 18, 1-56
• **SEEGER, T. ; HEULER, P.** Generalized application of Neuber's Rule. *J. Testing andEvaluation,* 1980, vol. 1, 199-204
• **MOLSKI, K. ; GLINKA, G.** A method of elastic-plastic stress and strain calculation at a notch root. *Materials Science and Engineering,* September 1981, vol. 50 (1), 93-100
• **NEUBER, H.** Kerbspannungslehre. Springer-Verlag, 1985, 86-89
• **HAIBACH, E.** Betriebsfestigkeit — Verfahren und Daten zur Bauteilberechnung. Springer-Verlag, 2002, 358-364
• **SANDER, M.** Sicherheit und Betriebsfestigkeit von Maschinen und Anlagen: Konzepte und Methoden zur Lebensdauervorhersage. Springer-Verlag, 41-44